# FASCICULE DE BREVET EUROPEEN

(11) **EP 3 963 282 B1**
(45) Date de publication et mention de la délivrance du brevet: **01.03.2023**
(21) Numéro de dépôt: 20728102.3
(22) Date de dépôt: 23.04.2020
(51) Int. Cl.: G01B 5/008, G01B 21/04

(54) **PROCÉDÉ DE CONTRÔLE DIMENSIONNEL D'UNE PIÈCE DE TURBOMACHINE**
VERFAHREN ZUR DIMENSIONSKONTROLLE EINER TURBOMASCHINENKOMPONENTE
METHOD FOR THE DIMENSIONAL INSPECTION OF A TURBOMACHINE COMPONENT

(30) Priorité: 29.04.2019 FR 1904508
(43) Date de publication de la demande: 09.03.2022
(73) Titulaire: SAFRAN AIRCRAFT ENGINES, 75015 Paris (FR)
(72) Inventeur: COUSIN, Roger, Georges, 77550 Moissy-Cramayel (FR); VINCENT, Arnaud, Alexandre, 77550 Moissy-Cramayel (FR)
(74) Mandataire: Gevers & Orès
(86) Numéro de dépôt international: PCT/FR2020/000149
(87) Numéro de publication internationale: WO 2020/221969

(56) Documents cités:
- CN-B- 104 316 016
- FR-A1- 2 989 610
- JP-A- S60 159 601

## Description

### Domaine technique de l'invention

La présente invention concerne la fabrication de pièces de turbomachines et plus particulièrement un procédé de contrôle dimensionnel d'une pièce de turbomachine telle qu'une aube de turbine issue de la fonderie ou de forgeage.

### Arrière-plan technique

L'amélioration des performances des turbomachines passe par la réalisation de pièces mécaniques telles que des aubes au profil aérodynamique optimisé. Les turbomachines double corps comprennent par exemple des aubages pour les étages de turbines basse pression dont les dimensions (épaisseurs ou largeurs) sont de quelques millimètres. Ces aubages sont généralement fabriqués par fonderie et coulée de métal dans un moule selon la technique dite à la cire perdue qui permet d'obtenir directement la forme souhaitée de l'aube sans passer par la mise en oeuvre d'étapes d'usinage pour parvenir à la pièce finie.

Toutefois, la technique de fonderie ne permet pas d'atteindre dans tous les cas la finesse recherchée pour certaines parties des aubages et il est nécessaire d'effectuer un usinage complémentaire de sorte à fournir des pièces aérodynamiques optimisées. L'usinage nécessite un paramétrage très spécifique qui est défini de manière empirique à partir d'une pièce théorique et des données de profil très précises de la pièce à obtenir.

Un contrôle dimensionnel de ces pièces est réalisé pour, d'une part vérifier si un usinage de ces pièces est nécessaire, pendant l'usinage, voire après usinage, et d'autre part valider leurs conformités après usinage. Du fait des tolérances acceptées pour les pièces de fonderie, des dimensions très faibles et d'éventuelles déformations de ces pièces, le contrôle est long et fastidieux. Ce contrôle est de manière générale opéré à l'aide d'une Machine à Mesurer Tridimensionnelle (MMT). Cette dernière réalise un palpage ou une mesure avec ou sans contact à l'aide d'un élément de palpation et à partir des données de la pièce théorique. Un exemple de contrôle est décrit dans les documents FR-A1-2989610, CN-B-104316016 et JP-A-S60159601.

Ce contrôle s'est révélé davantage compliqué pour les talons d'aubes de turbomachine. En effet, le talon, qui se localise à une extrémité radialement externe de la pale, présente une forme complexe avec une surface à mesurer relativement faible et des arêtes rayonnées. Or, pour des pièces particulières, un point de référence à partir duquel le contrôle de la pièce doit commencer est déterminé et est situé sur le talon. Lorsque la pièce présente par exemple des problèmes de tolérance comme expliqué ci-dessus, il existe un décalage tel entre le point de référence de la pièce théorique et celui de la pièce à contrôler que le palpeur commencera les mesures à une mauvaise position. Ceci peut engendrer un manque de précision lors du contrôle de la pièce. Pour y remédier, il arrive que l'opérateur doive alors modifier le paramétrage de la machine ou déplacer la pièce ou l'élément de palpation manuellement jusqu'à retrouver le point de référence correct sur la pièce à contrôler.

La demanderesse s'est donc notamment fixé comme objectif de fournir un procédé de contrôle dimensionnel d'une pièce de turbomachine qui soit plus rapide, automatique et peu couteux.

### Résumé de l'invention

Nous parvenons à cet objectif grâce à un procédé de contrôle dimensionnel d'une pièce de turbomachine à contrôler comprenant une première surface délimitée par une deuxième surface périphérique transversale à la première surface et un profil défini par un modèle théorique numérique avec une surface théorique correspondant à la première surface, la première surface présentant des dimensions supérieures à celles de la deuxième surface périphérique, le procédé comprenant les étapes suivantes :
- détermination de points théoriques sur la surface théorique du modèle théorique numérique;
- étalonnage de points d'étalonnage sur la première surface de la pièce à contrôler ;
- calcul d'un axe de décalage pour chaque point théorique par rapport à un point d'étalonnage correspondant,
- acquisition de points de contrôle sur la deuxième surface périphérique de la pièce à contrôler à partir de l'axe de décalage.

Ainsi, cette solution permet d'atteindre l'objectif susmentionné. En particulier, ce procédé permet de vérifier le conformité de la pièce bien que, ici le talon de l'aube, ne se trouve pas à la position théorique de départ prévu dans le modèle théorique et de déterminer plus rapidement les points à contrôler. En d'autres termes, même si le talon n'est pas à la bonne position, ce procédé permet de commencer la palpation au bon endroit sur la surface à contrôler. Ce contrôle est facilité également grâce à la première surface avec des dimensions plus importantes à celles de la deuxième surface à contrôler qui est généralement très étroite. La détermination, l'étalonnage et le calcul de l'axe de décalage peuvent être réalisés en moins de dix secondes ce qui est très rapide.

Le procédé de contrôle dimensionnel comprend également l'une ou plusieurs des caractéristiques suivantes, prises seules ou en combinaison :
- les points théoriques sont définis en fonction de la surface et/ou de la géométrie de la première surface.
- les points théoriques sont disposés à proximité de la périphérie de la surface théorique du modèle théorique.
- l'étape de calcul de l'axe de décalage comprend une étape de comparaison des données spatiales de chaque point théorique du modèle théorique et des données spatiales de chaque point d'étalonnage correspondant.
- l'étape de comparaison comprend les étapes suivantes :
   o traçage d'une droite entre au moins un point théorique et un point d'étalonnage correspondant;
   ∘ mesure d'un décalage spatial entre le point théorique et le point d'étalonnage ;
   ∘ calcul d'un axe de déplacement d'un outil d'usinage des surfaces usinées de la pièce à contrôler,
   ∘ détermination de cosinus directeurs de l'axe de décalage à partir de normales théoriques à la surface théorique du modèle théorique au niveau du point théorique, de la droite et de l'axe de déplacement de l'outil d'usinage.
- l'étape d'acquisition comprend une étape de calcul des coordonnées spatiales des points à contrôler sur la pièce en appliquant l'axe de décalage aux coordonnées théoriques des points à contrôler théoriques.
- le procédé comprend le positionnement d'un élément de palpation au regard de la première surface de la pièce à contrôler pour réaliser l'étape d'étalonnage, l'axe de l'élément de palpation étant orthogonal à la première surface.
- l'étape d'étalonnage et l'étape d'acquisition sont réalisées par un dispositif de contrôle de type Machines à Mesurer Tridimensionnelles.
- entre deux et huit points théoriques sont définis pendant l'étape détermination.
- la pièce de turbomachine est une aube mobile de turbomachine comprenant une pale et un talon agencé à une extrémité radialement extérieure de la pale, le talon comprenant une surface radialement interne délimitée par une surface périphérique radiale, la première surface étant la surface radialement interne du talon et la deuxième surface étant la surface périphérique radiale du talon.
- la Machines à Mesurer Tridimensionnelles comprend l'élément de palpation.
- lors de l'étape d'acquisition, l'axe de l'élément de palpation est orthogonal à la deuxième surface périphérique.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 représente de manière schématique une aube de turbomachine à contrôler et sur laquelle il y a une différence de position entre un talon de la pièce théorique et un talon de l'aube à contrôler.
[Fig. 2] La figure 2 est une vue schématique et de dessus de la surface d'un exemple de talon d'une aube de turbomachine à contrôler.
[Fig. 3] La figure 3 est une vue schématique d'un exemple de décalage spatial existant entre un plan théorique et un plan réel, et
[Fig. 4] La figure 4 représente de manière schématique différentes positions d'un dispositif de contrôle tel qu'une une machine de mesure tridimensionnelle selon l'invention.

### Description détaillée de l'invention

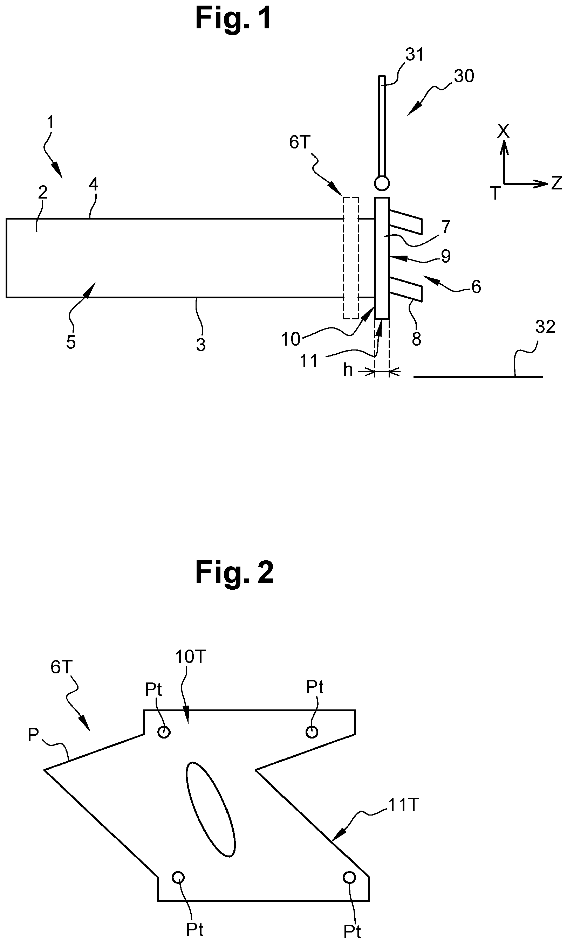

La figure 1 illustre une pièce de turbomachine en sortie des opérations de fonderie à la cire perdue et destinée à être contrôlée afin de vérifier si ses dimensions sont conformes avec une pièce ou modèle théorique obtenue par conception ou dessin assisté par ordinateur (CAO/DAO) au moyen de logiciel prévu à cet effet.

En particulier, il s'agit d'une aube mobile 1 d'une turbine basse pression. Bien entendu, cette aube peut être une aube de distributeur ou encore une aube destinée à équiper un autre organe de la turbomachine.

Une turbomachine (non représentée), en particulier à double flux, d'axe longitudinal, comprend de manière générale un générateur de gaz en amont duquel est montée une soufflante. Dans la présente invention, et de manière générale, les termes « amont » et « aval » sont définis par rapport à la circulation des fluides dans la turbomachine, et ici suivant l'axe longitudinal X. Le générateur de gaz comprend un ensemble de compresseur de gaz (pouvant comprendre un compresseur basse pression et un compresseur haute pression), une chambre de combustion et un ensemble de turbine (pouvant comprendre une turbine haute pression et une turbine basse pression). Le générateur de gaz est traversé par un flux aérodynamique primaire circulant dans une veine secondaire et généré par la soufflante. Un flux aérodynamique secondaire est également généré par la soufflante et, circule autour du générateur de gaz dans une veine secondaire, cette dernière étant coaxiale à la veine primaire.

Chaque turbine comprend un ou plusieurs étages qui sont disposés successivement selon l'axe longitudinal de la turbomachine. Chaque étage de turbine comprend une roue mobile à aubes formant un rotor et une roue fixe à aubes formant un stator. Les aubes de ce stator sont désignées par le terme d'aube de distributeur.

Chaque roue mobile comprend un disque annulaire centré sur l'axe longitudinal et une pluralité d'aubes mobiles montées sur la périphérie du disque. Ces aubes sont réparties circonférentiellement et régulièrement autour du disque de la roue mobile. Chaque roue mobile est agencée en aval d'une roue fixe d'aubes de distributeur.

En référence à la figure 1, l'aube mobile 1 comprend un pied (non représenté) et une pale 2 s'étendant depuis le pied suivant un axe radial Z (perpendiculaire à l'axe longitudinal lorsque l'aube est installée dans la turbomachine). Le pied est destiné à se loger dans une rainure de forme correspondante du disque qui comprend à cet effet une pluralité de rainures réparties régulièrement sur sa périphérie.

La pale 2 comprend un bord d'attaque 3 et un bord de fuite 4 qui sont opposées, ici suivant l'axe longitudinal X. Chaque pale 2 est disposée dans le flux aérodynamique de sorte que le bord d'attaque 3 est placé en amont du bord de fuite 4. Le bord d'attaque 3 et le bord de fuite 4 sont reliées par une surfaces intrados et une surface extrados 5 qui sont opposées suivant un axe transversal. L'axe transversal T est perpendiculaire à l'axe longitudinal X, ainsi qu'à l'axe radial Z.

L'aube mobile 1 comprend également un talon 6 qui prolonge la pale 2. Ce talon 6 est situé à une extrémité radialement extérieure de la pale 2 et transversalement à la pale. En particulier, le talon 6 est disposé radialement à l'opposé du pied de l'aube. Le talon 6 comprend typiquement une plateforme 7 destinée à former une portion de paroi radialement extérieure de la veine primaire. Le talon 6 est pourvu de léchettes 8 qui s'étendent radialement depuis une surface radialement externe 9 de la plateforme 7. Une surface radialement interne 10 est opposée à la surface radialement externe 9 et est orientée généralement vers le pied de l'aube. La surface radialement interne 10 est délimitée par une surface périphérique 11 radiale qui relie les surfaces radialement interne 10 et radialement externe 9.

La surface radialement interne est définie dans un premier plan XT (défini par les axes longitudinal et transversal) qui est perpendiculaire à l'axe radial. La surface radialement interne est plane ou sensiblement plane. Celle-ci présente des dimensions supérieures à celles de la surface périphérique 11. Comme nous pouvons le voir notamment sur la figure 1, la surface périphérique 11 présente une hauteur h suivant l'axe radial très faible ou étroite en comparaison de la largeur l de la surface radialement interne 10.

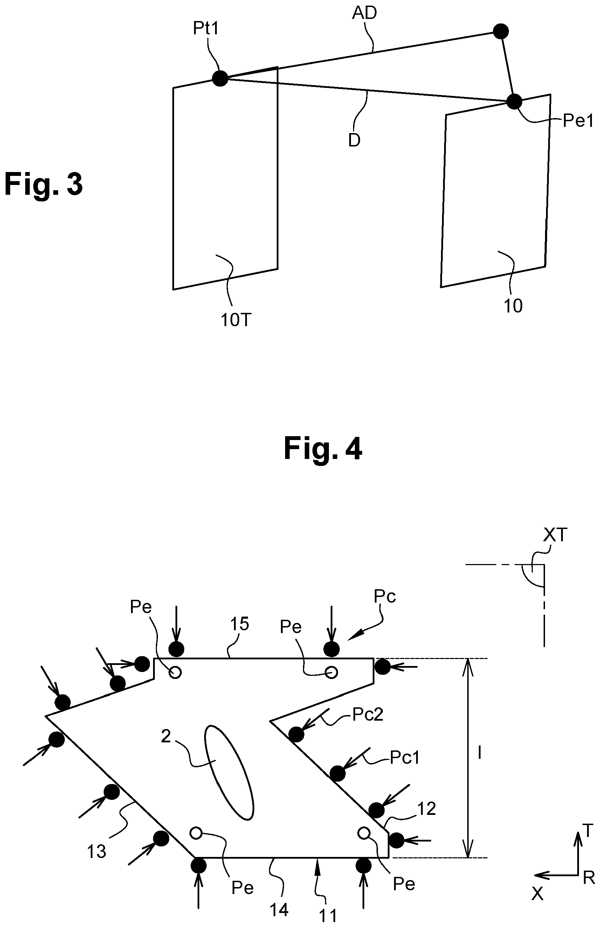

Comme nous pouvons le voir sur la figure 4, la plateforme 7 s'étend également suivant l'axe longitudinal X. Le talon 6 comprend un premier bord 12 et un deuxième bord 13 opposés suivant l'axe transversal T et qui sont destinés à prendre chacun contact circonférentielllement avec un talon d'une aube adjacente. Cela permet de bloquer axialement et circonférentiellement les déplacements des aubes. En outre, la plateforme comprend un côté amont 14 et un côté aval 15 qui sont opposés suivant l'axe longitudinal. Les côtés amont et aval 14, 15 ainsi que les premier et deuxième bords 12, 13 définissent la surface périphérique 11 radiale.

Le contrôle dimensionnel est réalisé à partir d'un dispositif de contrôle 30 (pouvant être du type d'une Machine de Mesure Tridimensionnelle (MMT)). Le dispositif de contrôle 30 comprend un élément de palpation 31 qui est destiné à mesurer des points ici sans contact à la surface de l'aube et notamment du talon. Typiquement, le dispositif de contrôle 30 comprend en outre un système électronique de contrôle ou microcontrôleur qui se compose de moyens de calculs et d'une mémoire.

La figure 1 montre également en traits pointillés la position d'un talon 6T correspondant à la définition théorique du talon de l'aube théorique telle que conçue dans un modèle théorique du logiciel de conception. Nous apercevons un décalage de la position du talon 6T de l'aube théorique et le talon 6 de l'aube à contrôler suivant l'axe radial. Le talon théorique comprend une surface théorique 10T radialement interne et une surface périphérique 11T théorique transversale à la surface théorique radialement interne. La surface théorique radialement interne correspond à la surface radialement interne 10 et la surface périphérique théorique correspond à la surface périphérique 11 radiale.

Nous souhaitons que l'aube de turbomachine soit contrôlée le plus rapidement possible malgré un éventuel décalage de position du talon théorique par rapport au talon de la pièce réelle à contrôler ou mesurer afin de savoir si celle-ci est conforme ou doit être dirigée vers les pièces de rebu.

Pour cela nous appliquons un procédé de contrôle dimensionnel de la pièce à contrôler, ici l'aube mobile, décrite ci-après. Ce procédé comprend avantageusement une étape de positionnement de l'aube à contrôler sur un support 32 équipant le dispositif de contrôle 30. La pièce à contrôler est en particulier positionnée sur le support 32 pour que son référentiel coïncide avec le référentiel de support 32. Le référentiel de l'aube est composé des axes longitudinal, radial et transversal.

La surface radialement interne 10 de la plateforme est orientée dans l'espace. Ici, le premier plan XT de la surface radialement interne 10 est parallèle à la verticale en référence à la figure 4.

Une étape de détermination de points théoriques Pt est réalisée sur la surface théorique 10T du talon théorique 6T de la pièce théorique (cf. figure 2). Ceux-ci sont conçus par calculs dans le modèle théorique par exemple en même temps que la conception dudit modèle théorique de l'aube à fabriquer (qui sera contrôlée). Ces points théoriques sont également définis en fonction de la surface à mesurer ou de la géométrie du talon. Ces points théoriques correspondent au point de référence pour commencer le contrôle des différents points à contrôler d'une pièce théorique. Dans le présent exemple, il est déterminé au moins deux points théoriques. Dans le présent exemple, quatre points théoriques sont déterminés comme nous le voyons sur la figure 2.

Un étalonnage de points d'étalonnage Pe ou de référence est réalisé sur la surface du talon, ici de la surface radialement interne 10 de l'aube à contrôler (cf. figure 4). Dans le présent exemple, au moins deux points d'étalonnage sont déterminés. Cette étape est réalisée grâce à l'élément de palpation 31 qui est déplacé de sorte que celui-ci soit en regard de la surface radialement interne. En particulier, lors de l'étape d'étalonnage, l'axe de l'élément de palpation 31 est orthogonal à la surface radialement interne du talon. Cela permet de déterminer la position de la pièce. De même, le déplacement de l'élément de palpation est sensiblement normal à la surface à étalonner. A noter que la surface n'est pas complètement plane. Ces points d'étalonnage sur la pièce à contrôler doivent correspondre aux points théoriques de la pièce à contrôler. Dans le présent exemple, quatre points d'étalonnage sont étalonnés.

En référence à la figure 2, les points théoriques (ainsi que les points d'étalonnage) sont agencés là où l'épaisseur ou hauteur du talon est la plus faible. Dans le présent exemple, les points théoriques sont disposés à proximité ou encore au plus proche de la périphérie P de la surface théorique 10T de la pièce théorique. Ceci est dans le but d'être proche des points à contrôler ultérieurement sur le talon et permettant de vérifier la conformité de la pièce à contrôler. Ces points à contrôler sont définis dans le modèle théorique du logiciel CAO/DAO.

Suivant le procédé, il est ensuite réalisé un calcul d'un axe de décalage d'au moins un point théorique par rapport au point d'étalonnage correspondant. Lors de cette étape est effectuée une comparaison des données spatiales ou tridimensionnelles du point théorique du modèle théorique et celles du point d'étalonnage correspondant sur la pièce à contrôler. Cette comparaison est effectuée avantageusement dans le système électronique de contrôle. Avantageusement tous les points théoriques sont comparés aux points d'étalonnage correspondant. Cela permet de vérifier si les points d'étalonnage se trouvent à la bonne position et correspondent aux coordonnées spatiales des points théoriques.

A cet effet, comme nous pouvons le voir schématiquement sur la figure 3, une droite D est tracée entre le point théorique Pt1 et le point d'étalonnage Pe1 (dans le système électronique de contrôle). Nous vérifions s'il existe un décalage spatial entre le point théorique et le point d'étalonnage correspondant. Selon cette figure 3, le point d'étalonnage ne correspond pas au point théorique en termes de positions et de coordonnées spatiales et il est nécessaire de déterminer ce décalage spatial.

Le système détermine l'axe de déplacement de l'outil d'usinage (après le moulage de la pièce) sur les surfaces usinées de la pièce à contrôler. Vu que les paramètres d'usinage sont définis au préalable, l'axe de déplacement de l'outil peut être déduit. Il est déduit les cosinus directeurs (csx, csy, csz dans le référentiel de la pièce théorique) du vecteur de l'axe de décalage. Les cosinus directeurs sont avantageusement constants.

Les cosinus directeurs sont déterminés à partir de normales théoriques à la surface théorique (correspondant à la surface radialement interne) de la pièce théorique au niveau du point théorique Pt, de la droite D et de l'axe de déplacement de l'outil d'usinage.

Une fois que l'axe de décalage est déterminé, le système calcule ou recalcule les coordonnées tridimensionnelles des points Pc à contrôler en appliquant cet axe de décalage AD.

Sur la figure 4, nous voyons une étape d'acquisition de divers points Pc1, Pc2 au niveau de la surface périphérique 11 radiale du talon 6 de la pièce à contrôler. Cette étape permet de vérifier que la pièce et notamment les dimensions du talon 6 sont conformes aux tolérances requises.

Ce procédé a été décrit pour contrôler la surface périphérique à partir de la surface radialement interne du talon comme surface de référence.

Bien entendu, la surface de référence peut être la surface radialement externe et celle à contrôler est la surface périphérique transversale à la surface radialement interne et adjacente à celle-ci.

## Revendications

1. Procédé de contrôle dimensionnel d'une pièce de turbomachine à contrôler comprenant une première surface (10) délimitée par une deuxième surface périphérique (11) transversale à la première surface et un profil défini par un modèle théorique numérique avec une surface théorique (10T) correspondant à la première surface (10), la première surface (10) ayant des dimensions supérieures à celles de la deuxième surface périphérique (11), le procédé comprenant les étapes suivantes :
- détermination de points théoriques (Pt ; Pt1) sur la surface théorique (10T) du modèle théorique numérique;
- étalonnage de points d'étalonnage (Pe ; Pe1) sur la première surface (10) de la pièce à contrôler (1) ;
- calcul d'un axe de décalage (AD) pour chaque point théorique (Pt ; P1) par rapport à un point d'étalonnage (Pe; Pe1) correspondant,
- acquisition de points de contrôle (Pc, Pc1, Pc2) sur la deuxième surface périphérique de la pièce à contrôler à partir de l'axe de décalage.

2. Procédé de contrôle dimensionnel selon la revendication 1, **caractérisé en ce que** les points théoriques sont définis en fonction de la surface et/ou de la géométrie de la première surface.

3. Procédé de contrôle dimensionnel selon la revendication 1, **caractérisé en ce que** les points théoriques sont disposés à proximité de la périphérie de la surface théorique (10T) du modèle théorique.

4. Procédé de contrôle dimensionnel selon l'une quelconque des revendications précédentes, **caractérisé en ce que** l'étape de calcul de l'axe de décalage comprend une étape de comparaison des données spatiales de chaque point théorique du modèle théorique et des données spatiales de chaque point d'étalonnage correspondant.

5. Procédé de contrôle dimensionnel selon la revendication précédente, **caractérisé en ce que** cette étape de comparaison comprend les étapes suivantes :
- traçage d'une droite (D) entre au moins un point théorique (Pt1) et un point d'étalonnage (Pe1) correspondant;
- mesure d'un décalage spatial entre le point théorique et le point d'étalonnage correspondant ;
- calcul d'un axe de déplacement d'un outil d'usinage des surfaces usinées de la pièce à contrôler,
- détermination de cosinus directeurs de l'axe de décalage à partir de normales théoriques à la surface théorique (10T) de la pièce théorique au niveau du point théorique (Pt), de la droite (D), et de l'axe de déplacement de l'outil d'usinage.

6. Procédé de contrôle dimensionnel selon l'une quelconque des revendications précédentes, **caractérisé en ce que** l'étape de d'acquisition comprend une étape de calcul des coordonnées spatiales des points à contrôler sur la pièce en appliquant l'axe de décalage aux coordonnées théoriques des points à contrôler.

7. Procédé de contrôle dimensionnel selon l'une quelconque des revendications précédentes, **caractérisé en ce qu'**il comprend le positionnement d'un élément de palpation (31) au regard de la première surface de la pièce à contrôler pour réaliser l'étape d'étalonnage, l'axe de l'élément de palpation (31) étant orthogonal à la première surface.

8. Procédé de contrôle dimensionnel selon l'une quelconque des revendications précédentes, **caractérisé en ce que** l'étape d'étalonnage et l'étape d'acquisition sont réalisées par un dispositif de contrôle de type Machines à Mesurer Tridimensionnelles.

9. Procédé de contrôle dimensionnel selon l'une quelconque des revendications précédentes, **caractérisé en ce qu'**entre deux et huit points théoriques sont réalisés pendant l'étape d'acquisition.

10. Procédé de contrôle dimensionnel selon l'une quelconque des revendications précédentes, **caractérisé en ce que** la pièce de turbomachine est une aube mobile (1) de turbomachine comprenant une pale (2) et un talon (6) agencé à une extrémité radialement extérieure de la pale, le talon (6) comprenant une surface radialement interne (10) délimitée par une surface périphérique (11) radiale, la première surface étant la surface radialement interne et la deuxième surface périphérique étant la surface périphérique radiale.

11. Procédé de contrôle dimensionnel selon l'une quelconque des revendications 8 à 10, **caractérisé en ce que** la Machines à Mesurer Tridimensionnelles comprend l'élément de palpation.

12. Procédé de contrôle dimensionnel selon l'une quelconque des revendications précédentes, **caractérisé en ce que** lors de l'étape d'acquisition, l'axe de l'élément de palpation est orthogonal à la deuxième surface périphérique.

## Patentansprüche

1. Abmessungskontrollverfahren eines zu kontrollierenden Turbostrahltriebwerksteils, das eine erste Oberfläche (10), die durch eine umlaufende zweite Oberfläche (11), die zu der ersten Oberfläche querverlaufend ist, abgegrenzt ist, und ein Profil umfasst, das durch ein numerisches theoretisches Modell mit einer theoretischen Oberfläche (10T) definiert ist, die der ersten Oberfläche (10) entspricht, wobei die erste Oberfläche (10) größere Abmessungen aufweist als jene der umlaufenden zweiten Oberfläche (11), wobei das Verfahren die folgenden Schritte umfasst:
- Bestimmung von theoretischen Punkten (Pt; P1) auf der theoretischen Oberfläche (10T) des numerischen theoretischen Modells;
- Kalibrierung von Kalibrierungspunkten (Pe; Pe1) auf der ersten Oberfläche (10) des zu kontrollierenden Teils (1);
- Berechnung einer Versatzachse (AD) für jeden theoretischen Punkt (Pt ; P1) bezüglich eines entsprechenden Kalibrierungspunkts (Pe; Pe1),
- Erfassung von Kontrollpunkten (Pc, Pc1, Pc2) auf der zweiten umlaufenden Oberfläche des zu kontrollierenden Teils ausgehend von der Versatzachse.

2. Abmessungskontrollverfahren nach Anspruch 1, **dadurch gekennzeichnet, dass** die theoretischen Punkte in Abhängigkeit von der Oberfläche und/oder von der Geometrie der ersten Oberfläche definiert sind.

3. Abmessungskontrollverfahren nach Anspruch 1, **dadurch gekennzeichnet, dass** die theoretischen Punkte in der Nähe des Umfangs der theoretischen Oberfläche (10T) des theoretischen Modells angeordnet sind.

4. Abmessungskontrollverfahren nach einem der vorstehenden Ansprüche, **dadurch gekennzeichnet, dass** der Berechnungsschritt der Versatzachse einen Vergleichsschritt von räumlichen Daten von jedem theoretischen Punkt des theoretischen Modells und von räumlichen Daten von jedem entsprechenden Kalibrierungspunkt umfasst.

5. Abmessungskontrollverfahren nach dem vorstehenden Anspruch, **dadurch gekennzeichnet, dass** dieser Vergleichsschritt die folgenden Schritte umfasst:
- Zeichnen einer Geraden (D) zwischen mindestens einem theoretischen Punkt (Pt1) und einem entsprechenden Kalibrierungspunkt (Pe1);
- Messung eines räumlichen Versatzes zwischen dem theoretischen Punkt und dem entsprechenden Kalibrierungspunkt;
- Berechnung einer Verschiebungsachse eines Bearbeitungswerkzeugs von bearbeiteten Oberflächen des zu kontrollierenden Teils,
- Bestimmung von Richtungskosinussen der Versatzachse ausgehend von theoretischen Normalen zu der theoretischen Oberfläche (10T) des theoretischen Teils auf Höhe des theoretischen Punkts (Pt), der Geraden (D) und der Verschiebungsachse des Bearbeitungswerkzeugs.

6. Abmessungskontrollverfahren nach einem der vorstehenden Ansprüche, **dadurch gekennzeichnet, dass** der Erfassungsschritt einen Berechnungsschritt von räumlichen Koordinaten der zu kontrollierenden Punkte auf dem Teil umfasst, indem die Versatzachse auf theoretischen Koordinaten der zu kontrollierenden Punkte angewendet wird.

7. Abmessungskontrollverfahren nach einem der vorstehenden Ansprüche, **dadurch gekennzeichnet, dass** es die Positionierung eines Abtastungselements (31) hinsichtlich der ersten Oberfläche des zu kontrollierenden Teils umfasst, um den Kalibrierungsschritt durchzuführen, wobei die Achse des Abtastungselements (31) orthogonal zu der ersten Oberfläche ist.

8. Abmessungskontrollverfahren nach einem der vorstehenden Ansprüche, **dadurch gekennzeichnet, dass** der Kalibrierungsschritt und der Erfassungsschritt durch eine Kontrollvorrichtung der Art Koordinatenmessgeräte durchgeführt werden.

9. Abmessungskontrollverfahren nach einem der vorstehenden Ansprüche, **dadurch gekennzeichnet, dass** während des Erfassungsschritts zwischen zwei und acht theoretische Punkte realisiert werden.

10. Abmessungskontrollverfahren nach einem der vorstehenden Ansprüche, **dadurch gekennzeichnet, dass** das Turbostrahltriebwerksteil eine mobile Schaufel (1) des Turbostrahltriebwerks ist, umfassend ein Blatt (2) und einen Fuß (6), angeordnet an einem radial äußeren Ende des Blatts, wobei der Fuß (6) eine radial interne Oberfläche (10) umfasst, abgegrenzt durch eine radial umlaufende Oberfläche (11), wobei die erste Oberfläche die radial interne Oberfläche ist und die zweite umlaufende Oberfläche die radial umlaufende Oberfläche ist.

11. Abmessungskontrollverfahren nach einem der Ansprüche 8 bis 10, **dadurch gekennzeichnet, dass** die Koordinatenmessgeräte das Abtastungselement umfassen.

12. Abmessungskontrollverfahren nach einem der vorstehenden Ansprüche, **dadurch gekennzeichnet, dass** bei dem Erfassungsschritt die Achse des Abtastungselements orthogonal zu der zweiten umlaufenden Oberfläche ist.

## Claims

1. A method for the dimensional control of a turbomachine component to be controlled comprising a first surface (10) delimited by a second peripheral surface (11) transverse to the first surface and a profile defined by a numerical theoretical model with a theoretical surface (10T) corresponding to the first surface (10), the first surface (10) having larger dimensions than the second peripheral surface (11), the method comprising the following steps:
- determining theoretical points (Pt; Pt1) on the theoretical surface (10T) of the numerical theoretical model;
- calibrating calibration points (Pe; Pe1) on the first surface (10) of the component to be controlled (1);
- calculating an offset axis (AD) for each theoretical point (Pt; P1) with respect to a corresponding calibration point (Pe; Pe1),
- acquiring control points (Pc, Pc1, Pc2) on the second peripheral surface of the component to be inspected from the offset axis.

2. The dimensional control method according to claim 1, **characterized in that** the theoretical points are defined in accordance with the surface and/or the geometry of the first surface.

3. The dimensional control method according to claim 1, **characterized in that** the theoretical points are arranged close to the periphery of the theoretical surface (10T) of the theoretical model.

4. The dimensional control method according to any one of the preceding claims, **characterized in that** the step of calculating the offset axis comprises a step of comparing spatial data of each theoretical point of the theoretical model and spatial data of each corresponding calibration point.

5. The dimensional control method according to the preceding claim, **characterized in that** this comparison step comprises the following steps:
- drawing a straight line (D) between at least one theoretical point (Pt1) and a corresponding calibration point (Pe1);
- measuring a spatial offset between the theoretical point and the corresponding calibration point;
- calculating a displacement axis of a machining tool of the machined surfaces of the component to be controlled,
- determining the director cosines of the offset axis from theoretical normals to the theoretical surface (10T) of the theoretical component at the level of the theoretical point (Pt), the straight line (D), and the displacement axis of the machining tool.

6. The dimensional control method according to any of the preceding claims, **characterized in that** the acquisition step comprises a step of calculating the spatial coordinates of the points to be controlled on the component by applying the offset axis to the theoretical coordinates of the points to be controlled.

7. The dimensional control method according to any one of the preceding claims, **characterized in that** it comprises the positioning of a palpation element (31) opposite the first surface of the component to be controlled in order to carry out the calibration step, the axis of the palpation element (31) being orthogonal to the first surface.

8. The dimensional control method according to any one of the preceding claims, **characterized in that** the calibration step and the acquisition step are carried out by an control device of the Coordinate-Measuring Machine type.

9. The dimensional control method according to any one of the preceding claims, **characterized in that** between two and eight theoretical points are made during the acquisition step.

10. The dimensional control method according to any one of the preceding claims, **characterized in that** the turbomachine component is a turbomachine movable vane (1) comprising a blade (2) and a shroud (6) arranged at a radially outer end of the blade, the shroud (6) comprising a radially inner surface (10) delimited by a radial peripheral surface (11), the first surface being the radially inner surface and the second peripheral surface being the radial peripheral surface.

11. The dimensional control method according to any one of claims 8 to 10, **characterized in that** the Coordinate-Measuring Machine comprises the palpation element.

12. The dimensional control method according to any one of the preceding claims, **characterized in that** during the acquisition step, the axis of the palpation element is orthogonal to the second peripheral surface.
